# FASCICULE DE BREVET EUROPEEN

(11) **EP 0 596 088 B1**
(45) Date de publication et mention de la délivrance du brevet: **06.08.1997**
(21) Numéro de dépôt: 93911812.1
(22) Date de dépôt: 22.04.1993
(51) Int. Cl.: C03C 13/06, C03C 3/097

(54) **FIBRES MINERALES SUSCEPTIBLES DE SE DISSOUDRE EN MILIEU PHYSIOLOGIQUE**
IN PHYSIOLOGISCHEM MEDIUM SICH AUFLOSENDE MINERALFASER
MINERAL FIBRES CAPABLE OF DISSOLVING IN A PHYSIOLOGICAL MEDIUM

(30) Priorité: 23.04.1992 FR 9204982
(43) Date de publication de la demande: 11.05.1994
(73) Titulaire: ISOVER SAINT-GOBAIN, 92400 Courbevoie (FR)
(72) Inventeur: HOLSTEIN, Wolfgang, D-6313 Homberg (DE); LOHE, Peter, D-6704 Mutterstadt (DE); SCHWAB, Wolfgang, D-6831 Plankstadt (DE); De MERINGO, Alain, F-75005 Paris (FR); THELOHAN, Sylvie, F-94120 Fontenay-sous-Bois (FR)
(74) Mandataire: Breton, Jean-Claude
(86) Numéro de dépôt international: FR9300393
(87) Numéro de publication internationale: WO9322251

(56) Documents cités:
- EP-A- 0 459 897
- WO-A-90/02713
- WO-A-92/09536
- FR-A- 2 662 687
- GB-A- 2 220 654
- CHEMICAL ABSTRACTS, vol. 92, no. 24, 16 Juin 1980, Columbus, Ohio, US; abstract no. 202476v, page 259 ;column L ;

## Description

La présente invention concerne le domaine des fibres minérales ; elle vise plus précisément des fibres minérales dont la composition est telle qu'elles se dégradent dès qu'elles sont en contact d'un milieu physiologique.

L'isolation thermique et acoustique des bâtiments est souvent réalisée à partir de produits constitués pour l'essentiel de laine minérale, telle que la laine de roche. La configuration particulière des lieux à isoler conduit souvent les personnes chargées de la pose de ces produits à les découper sur place. Cette opération provoque la rupture des fibres et, éventuellement, la dispersion de certaines d'entre elles dans l'atmosphère. Il s'ensuit que, parfois, une fibre peut être inhalée accidentellement.

Les utilisateurs sont sensibilisés à ce risque et il est souhaitable de leur proposer des produits fibreux de substitution qui, tout en présentant les propriétés d'isolation requises, sont facilement dissous par un tissu vivant. Cette aptitude à la dissolution dans un organisme humain est généralement appréciée en mesurant la vitesse de dissolution des fibres dans une solution qui simule un fluide extracellulaire.

La présente invention a pour objet des fibres minérales qui se dissolvent rapidement dans une telle solution, tout en conservant une bonne tenue mécanique lorsqu'elles sont soumises à la chaleur.

Ce but est atteint grâce à des fibres dont la composition comprend les constituants ci-après, dont la teneur est exprimée en pourcentage pondéral, selon les limitations définies comme suit :

| | |
|---|---|
| SiO₂ | 48 à 67 % |
| Al₂O₃ | < 4 % |
| Fe₂O₃ | 0 à 7 % (fer total exprimé sous cette forme) |
| CaO | 16 à 35 % |
| MgO | 1 à 16 % |
| Na₂O + K₂O | 1 à 6,5 % |
| P₂O₅ | 0 à 5 % |

en considérant que ces compositions sont également définies par le fait que les teneurs de ces constituants respectent les relations suivantes :

| | |
|---|---|
| Na₂O + P₂O₅ | ≥ 2 % |
| Fe₂O₃ + Al₂O₃ | < 8 % |
| CaO + MgO + Fe₂O₃ | > 25 % |

De préférence, la fibre minérale selon l'invention comprend une teneur pondérale en silice de 50 à 66%, de préférence de 52 à 64,5%, notamment de 52 à 62%.

Elle comprend de préférence une teneur pondérale en Al₂O₃ inférieure ou égale à 3,9%, une teneur pondérale en oxyde magnésium comprise entre 3 et 16%, de préférence entre 6,5 et 16% ; une somme des teneurs pondérales en Na₂O et K₂O comprise entre 1 et 6% et de préférence entre 1 et 5% ; une teneur pondérale en P₂O₅ comprise entre 0,1 et 5%, notamment entre 1 et 4%. Enfin, elle comprend également de préférence de la chaux CaO, de la magnésie MgO et des oxydes de fer Fe₂O₃ dans des teneurs pondérales telles que leur somme est supérieure à 32%, notamment à 35%.

D'après la présente invention, la présence d'oxydes alcalins, en particulier de Na₂O, et/ou la présence de pentoxyde de phosphore dans la composition des fibres minérales définies précédemment, permet d'augmenter leur vitesse de dissolution dans une solution simulant un fluide extracellulaire.

Par ailleurs, une teneur trop élevée en oxydes alcalins, notamment en Na₂O, est préjudiciable à une bonne tenue mécanique des fibres minérales selon l'invention lorsqu'elles sont soumises à la chaleur.

Pour ces raisons les fibres minérales contiennent au moins 2% en poids de Na₂O et/ou de pentoxyde de phosphore, la somme des oxydes alcalins n'excédant pas 6,5% en poids. Dans des limites préférées, la somme des oxydes alcalins est comprise entre 1 et 6%.

La silice est un constituant qui diminue la vitesse de dissolution des fibres. Lorsque sa teneur pondérale est élevée, il est nécessaire de contrebalancer cet effet négatif en augmentant les constituants qui favorisent la dissolution des fibres, comme par exemple Na₂O, en diminuant la teneur en alumine et ou en introduisant dans la composition du pentoxyde de phosphore. Cette augmentation a cependant une limite comme évoqué précédemment. Pour cette raison, la teneur en SiO₂ ne doit pas excéder 67%.

Les oxydes de fer, exprimés sous la seule forme Fe₂O₃, ainsi que l'alumine jouent un rôle à l'égard de la vitesse de dissolution. Un excès de l'un et/ou de l'autre diminue la vitesse de dissolution des fibres. Une vitesse de dissolution importante peut être conservée lorsque la somme des teneurs de ces deux oxydes demeure inférieure à 12%, sous réserve que la teneur en alumine n'excède pas 8%.

Bien que Al₂O₃ et les oxydes de fer ne soient pas indispensables dans les fibres selon l'invention, leur présence dans leur composition améliore leur tenue mécanique, conjointement avec l'addition d'oxydes alcalino-terreux.

Ainsi les fibres minérales selon l'invention présentent une bonne tenue mécanique lorsqu'elles sont soumises à la chaleur grâce, en particulier, au fait que leur composition comprend de la chaux, de la magnésie et des oxydes de fer dans des proportions telles que la somme des teneurs de ces oxydes excède 25%.

D'une manière générale les fibres selon l'invention les plus avantageuses, qui répondent à l'une quelconque des définitions précédentes, comprennent moins de 4% de Al₂O₃.

Les avantages des fibres selon l'invention seront mieux appréciés dans la description détaillée suivante, illustrée de quelques exemples.

Les tableaux en annexe rassemblent différentes compositions de fibres minérales correspondant à la définition de l'invention ainsi qu'une composition donnée à titre d'éléments de comparaison.

Les fibres correspondant aux compositions figurant dans le tableau n° 1 ont été obtenues à partir d'un dispositif d'étirage par fluide, du type de ceux décrits dans les brevets US-A-3 532 479 et US-A-4 961 695.

La répartition des diamètres des fibres testées, correspondant aux exemples n° 1 à 8, est telle que 50% d'entre elles présentent un diamètre inférieur respectivement à 2,2 µm, 2,5 µm, 3,1 µm, 3,7 µm, 3,5 µm, 3,4 µm, 3,7 µm.

L'aptitude de ces fibres à être dissoutes dans un milieu physiologique a été mesurée dans les conditions expérimentales suivantes : deux cents milligrames de fibres sont placées entre deux disques perforés, séparés par une bague circulaire. Ces deux disques, d'un diamètre de 4,3 centimètres, sont recouverts d'un filtre en polycarbonate. Cet ensemble constitue une cellule de mesure à travers laquelle circule une solution simulant un fluide extracellulaire dont le débit est réglé par une pompe péristaltique. Ce débit est de 40 millilitres par jour, la durée du test étant de 42 jours. La cellule et le flacon contenant la solution d'attaque sont maintenus à 37°C. Après avoir traversé la cellule, la solution d'attaque est recueillie dans des bouteilles pour être analysée ultérieurement.

Par analyse, on mesure la quantité de silice passée en solution ; le poids de silice dissoute rapporté au poids de silice initialement présente dans la fibre donne un résultat en pourcent, qui est un bon indicateur de la capacité de la fibre testée à se dégrader en milieu physiologique.

La solution d'attaque choisie a la composition où la teneur de chaque constituant est exprimée en g/l :
. MgCl₂.6H₂O 0,212
. NaCl 6,415
. Na₂HPO₄ 0,148
. Na₂SO₄.2H₂O 0,179
. CaCl₂.4H₂O 0,318
. NaHCO₃ 2,703
. (Na₂ tartrate).2H₂O 0,180
. (Na₃ citrate).5,5H₂O 0,186
. Na lactate 0,175
. Na pyruvate 0,172
. Glycine 0,118

Par ailleurs, la tenue mécanique des fibres testées lorsqu'elles sont soumises à la chaleur a été mesurée dans les conditions suivantes : un échantillon cubique de fibres, qui présente une densité d'environ 100 kg/m³, est placé dans un four tubulaire dont la montée en température, programmée est de 5 degrés centigrades par minute. L'affaissement de l'échantillon est mesurée par visée optique. La température à laquelle le bloc présente un affaissement de 10 % a été retenue comme élément d'appréciation de la tenue mécanique des fibres testées. Les différents résultats concernant la dissolution des fibres testées et leur tenue mécanique sont exposés respectivement dans les tableaux n° 2 et 3.

La composition servant d'élément de comparaison correspond à l'exemple No. 1. Il s'agit d'une composition de basalte classique, dans laquelle les teneurs en oxydes de fer et en alumine sont élevées.

Par rapport à la précédente, les fibres dont la composition correspond à l'exemple No. 3 présentent une tenue mécanique légèrement améliorée, mais une vitesse de dissolution un peu plus faible due vraisemblablement à la teneur en oxydes de fer. Cette diminution de la vitesse de dissolution est très largement compensée par l'introduction de P₂O₅ comme le montre l'exemple No. 4. Cette vitesse de dissolution peut être encore fortement augmentée, en maintenant, voire même en améliorant sa tenue en température comme le montre l'exemple No. 5.

Parmi les fibres répondant à la définition générale de l'invention exposée précédemment, celles qui présentent un bon compromis entre les vitesses de dissolution et les tenues mécaniques les plus élevées sont celles dont la teneur en SiO₂ est compris entre 52 et 62 %, la teneur en magnésie étant au moins égale à 3 % et la teneur en oxydes alcalins comprise entre 1 et 5 %.

Les fibres selon l'invention dont la teneur en CaO, MgO et Fe₂O₃ est telle que la somme de ces constituants est égale ou supérieure à 32 %, présentent une température correspondant à un affaissement de 10 % au moins égale à celle du basalte.

Les compositions de ces fibres sont illustrées par les exemples No. 5 à 6.

Le tableau N° 4 rassemble d'autres compositions correspondant à l'invention. L'aptitude de ces verres à être dissous dans un milieu physiologique a été mesurée par l'intermédiaire d'un test réalisé sur du verre broyé mécaniquement dans les conditions suivantes :
* les grains de verre obtenus par broyage sont tamisés et la fraction granulométrique comprise entre 355 et 400 micromètres est retenue pour le test. Les grains ainsi sélectionnés sont lavés à l'alcool et séchés dans une étuve. Un gramme de cette poudre de verre est placé dans la cellule identique à celle décrite précédemment,
* la solution utilisée est légèrement différente de la précédente quant aux teneurs en NaCl et en CaCl₂, qui sont respectivement de 6,6 et 0,022 g/l. Elle comprend de surcroit 1,08 g/l de formaldehyde,
* le débit de cette solution est de 300 millilitres par jour et la durée du test est de deux semaines avec des mesures intermédiaires de un jour et une semaine.

Dans le tableau N° 4 l'exemple N° 1 qui sert de référence est identique à celui figurant dans le tableau N° 1.

Au bout d'un jour, l'attaque sur les verres N° 9 à 11 est beaucoup plus élevée que sur le verre de référence, mais l'influence de la composition ne se dégage pas à un stade aussi précoce de l'attaque.

Il n'en est plus de même au bout d'une semaine. L'augmentation de la teneur en Fe₂O₃ est vraisemblablement à l'origine de la diminution de la quantité de silice dissoute, mais de façon surprenante cette diminution est relativement faible. Avec une teneur de 10 % de Fe₂O₃ le verre exemple N° 11 est encore environ dix fois plus soluble que le verre de référence.

Les verres N° 12 et 13 montrent que l'introduction de P₂O₅ et la suppression quasi-totale de Al₂O₃ permettent d'atteindre des vitesses de dissolution élevées malgré la teneur élevée en Fe₂O₃ et l'absence d'oxydes alcalins.

Les verres N° 14 à 15 illustrent des variantes intermédiaires relativement aux teneurs en Fe₂O₃ et Al₂O₃, mais avec des oxydes alcalins.

Le verre N° 14 illustre les compositions sans oxyde de fer et qui présente une vitesse de dissolution élevée malgré une teneur importante en Al₂O₃.

Parmi les fibres de l'invention répondant à la définition générale de l'invention, une catégorie de compositions préférées, correspond à celles définies par une teneur en pentoxyde de phosphore compris entre 1 et 4 %.

Les verres selon l'invention peuvent être transformés en fibres à partir de dispositifs de centrifugation externe connus, comme ceux décrits par exemple dans les brevets US-A-2.663.051, EP-A-0.167.508 ou FR-A-2.609.708.

Les fibres ainsi obtenues permettent d'obtenir des produits fibreux d'excellente qualité aptes à de nombreuses applications. Ainsi par exemple, les fibres selon l'invention sont avantageusement utilisées sous la forme de panneaux géométriquement bien définis, rigidifiés par un liant polymérisé, ou sous la forme de produits tubulaires destinés à isoler les canalisations. Les fibres selon l'invention peuvent être utilisées également sous forme de matelas cousus sur du carton ou du grillage métallique, sous forme de bourrelet, ou même en vrac par remplissage.

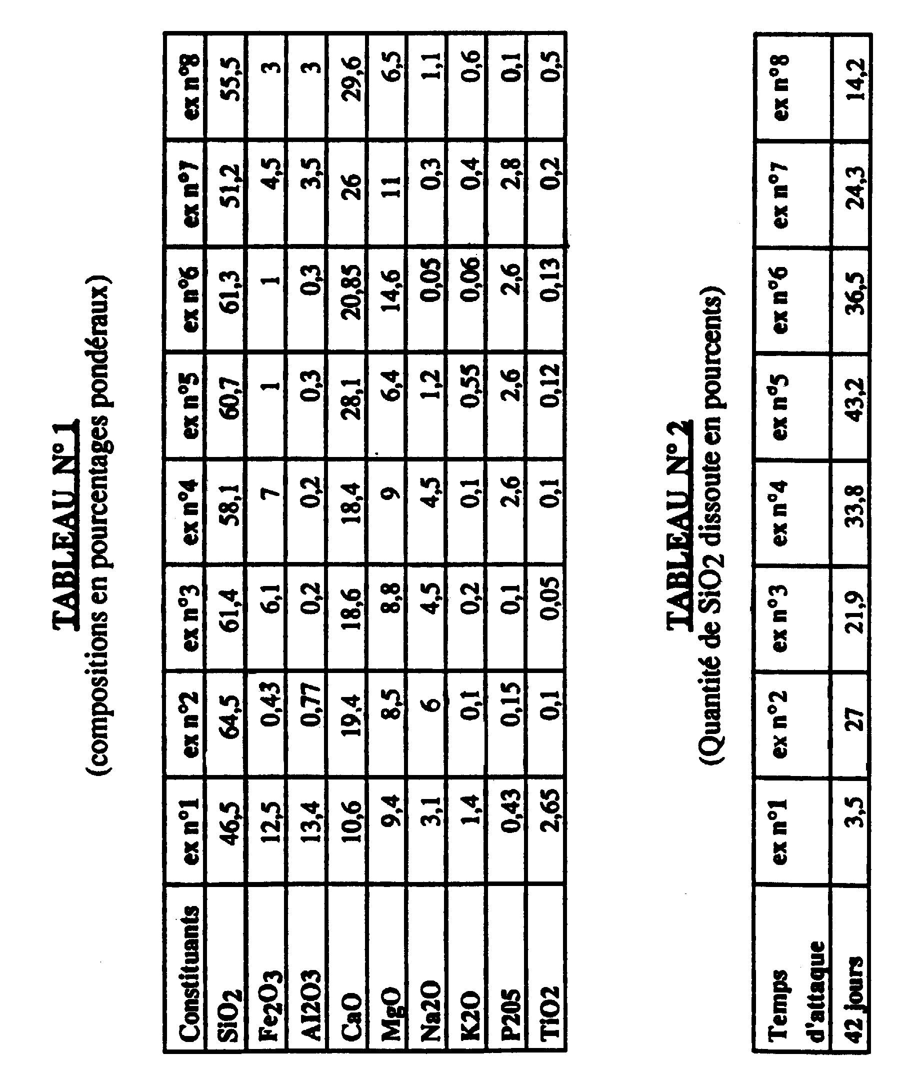

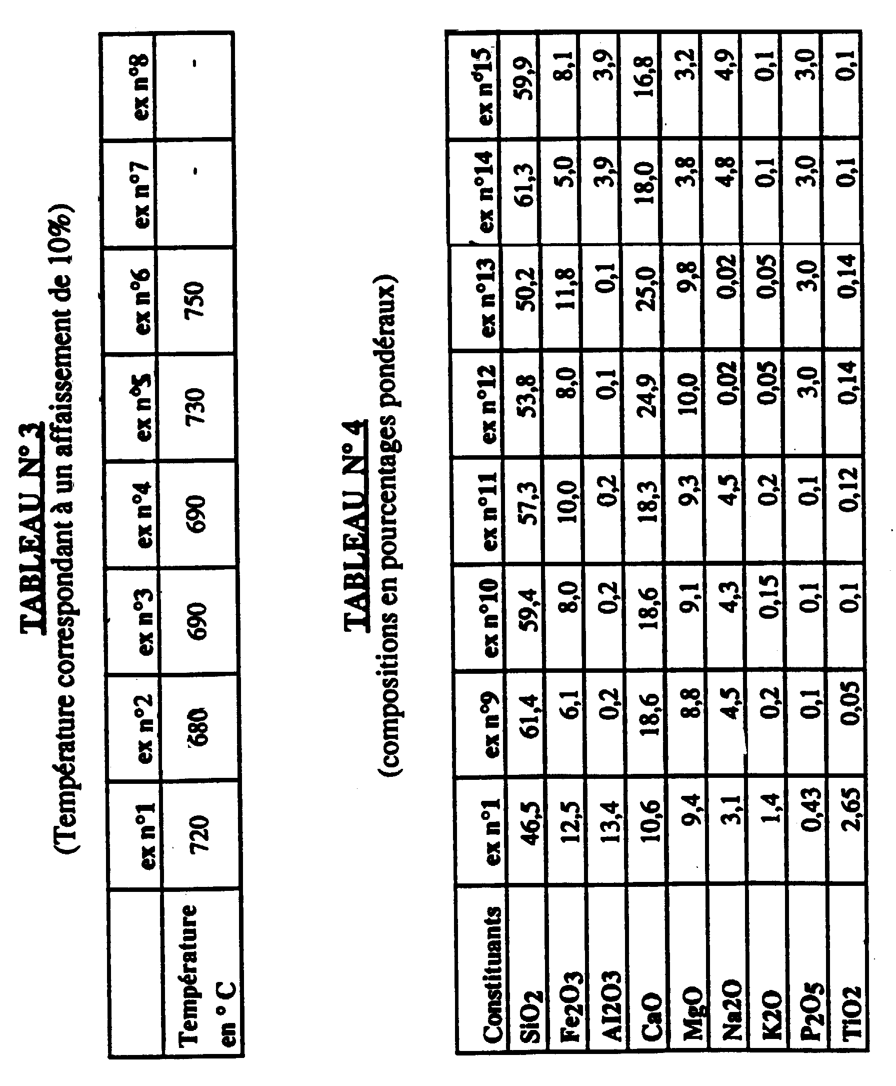

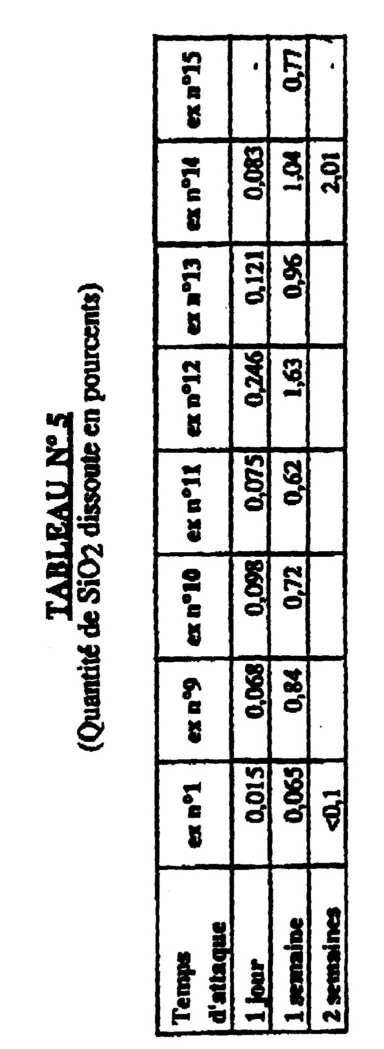

## Revendications

1. Fibre minérale susceptible de se dissoudre dans un milieu physiologique, **caractérisée en ce qu**'elle comprend les constituants ci-après selon les proportions pondérales suivantes :
. SiO₂ 48 à 67 %
. Al₂O₃ < 4 %
. Fe₂O₃ (fer total) 0 à 7 %
. CaO 16 à 35 %
. MgO 1 à 16 %
. Na₂O + K₂O 1 à 6,5 %
. P₂O₅ 0 à 5 %
en considérant que ces compositions sont également définies par le fait que les teneurs de ces constituants respectent les relations suivantes :
. Na₂O + P₂O₅ ≥ 2 %
. Fe₂O₃ + Al₂O₃ <8 %
. CaO + MgO + Fe₂O₃ >25 %

2. Fibre minérale selon la revendication 1, **caractérisée en ce qu**'elle comprend de la silice dans la teneur pondérale suivante :
. SiO₂ 50-66 % de préférence 52-64,5%, notamment 52-62 %

3. Fibre minérale selon la revendication 1 ou la revendication 2, **caractérisée en ce qu**'elle comprend de l'aluminium Al₂O₃ dans la teneur pondérale suivante :
. Al₂O₃ ≤ 3,9%

4. Fibre minérale selon l'une des revendications précédentes, **caractérisée en ce qu'**elle comprend de l'oxyde de magnésium dans la teneur pondérale suivante :
. MgO 3-16 %, de préférence 6,5-16 %

5. Fibre minérale selon l'une des revendications précédentes, **caractérisée en ce qu**'elle comprend du Na₂O et du K₂O dans des teneurs pondérales telles que leur somme est la suivante :
. Na₂O + K₂O 1 à 6 %, de préférence 1 à 5 %

6. Fibre minérale selon l'une des revendications précédentes, **caractérisée en ce qu'**elle comprend du P₂O₅ dans la teneur pondérale suivante :
. P₂O₅ 0,1-5 %, de préférence 1 à 4 %

7. Fibre minérale selon l'une des revendications précédentes, **caractérisée en ce qu'**elle comprend de la chaux CaO, de la magnésie MgO et des oxydes de fer Fe₂O₃ dans des teneurs pondérales telles que leur somme est :
. CaO + MgO + Fe₂O₃ > 32 % de préférence > 35 %

8. Produit destiné à l'isolation thermique et/ou acoustique constitué de fibres minérales, **caractérisé en ce que** lesdites fibres présentent une composition chimique telle que définie par l'une quelconque des revendications précédentes.

## Patentansprüche

1. Mineralfaser, die sich in einem physiologischen Milieu auflösen kann, **dadurch gekennzeichnet, daß** sie nachstehende Bestandteile in folgenden Gewichtsanteilen
SiO₂ 48 bis 67 %,
Al₂O₃ < 4 %,
Fe₂O₃ (Gesamteisen) 0 bis 7 %,
CaO 16 bis 35 %,
MgO 1 bis 16 %,
Na₂O + K₂O 1 bis 6,5 % und
P₂O₅ 0 bis 5 %
unter der Voraussetzung enthält, daß die Zusammensetzungen auch durch die Gehalte an diesen Bestandteilen definiert sind, die folgende Beziehungen erfüllen müssen:
Na₂O + P₂O₅ ≥ 2 %,
Fe₂O₃ + Al₂O₃ < 8 % und
CaO + MgO + Fe₂O₃ > 25 %.

2. Mineralfaser nach Anspruch 1, **dadurch gekennzeichnet, daß** sie Siliciumdioxid in folgenden Gewichtsanteilen enthält:
SiO₂ 50 bis 66 %, vorzugsweise 52 bis 64,5 % und insbesondere 52 bis 62 %.

3. Mineralfaser nach Anspruch 1 oder 2, **dadurch gekennzeichnet, daß** sie Aluminiumoxid, Al₂O₃, in folgendem Gewichtsanteil:
Al₂O₃ ≤ 3,9 % enthält.

4. Mineralfaser nach einem der vorhergehenden Ansprüche, **dadurch gekennzeichnet, daß** sie Magnesiumoxid in einem Gewichtsanteil von
MgO 3 bis 16 % und vorzugsweise 6,5 bis 16 % enthält.

5. Mineralfaser nach einem der vorhergehenden Ansprüche, **dadurch gekennzeichnet, daß** sie Na₂O und K₂O in solchen Gewichtsanteilen enthält, daß deren Summe
Na₂O + K₂O 1 bis 6 % und vorzugsweise 1 bis 5 % beträgt.

6. Mineralfaser nach einem der vorhergehenden Ansprüche, **dadurch gekennzeichnet, daß** sie P₂O₅ in einem Gewichtsanteil von
P₂O₅ 0,1 bis 5 % und vorzugsweise 1 bis 4 % enthält.

7. Mineralfaser nach einem der vorhergehenden Ansprüche, **dadurch gekennzeichnet, daß** sie Calciumoxid, CaO, Magnesiumoxid, MgO, und Eisenoxide, Fe₂O₃, in solchen Gewichtsanteilen enthält, daß deren Summe
CaO + MgO + Fe₂O₃ > 32 % und vorzugsweise > 35 % beträgt.

8. Erzeugnis aus Mineralfasern für die Wärme- und/oder Schallisolierung, **dadurch gekennzeichnet, daß** diese Fasern eine chemische Zusammensetzung besitzen, wie sie in einem der vorhergehenden Ansprüche definiert ist.

## Claims

1. Mineral fibre which can dissolve in a physiological medium, characterised in that it comprises the following components in the proportions by weight as follows:
. SiO₂ 48 to 67%
. Al₂O₃ < 4%
. Fe₂O₃ 0 to 7% (total iron)
. CaO 16 to 35%
. MgO 1 to 16%
. Na₂O + K₂O 1 to 6.5%
. P₂O₅ 0 to 5%
taking into consideration that these compositions are also defined by the fact that the contents of these components comply with the following ratios:
. Na₂O + P₂O₅ ≥ 2%
. Fe₂O₃ + Al₂O₃ < 8%
. CaO + MgO + Fe₂O₃ > 25%

2. Mineral fibre according to Claim 1, characterised in that it comprises silica in the following proportion by weight:
. SiO₂ 50 - 66%,
preferably 52 - 64.5%,
and more particularly 52 - 62%.

3. Mineral fibre according to Claim 1 or Claim 2, characterised in that it comprises aluminium Al₂O₃ in the following proportion by weight:
. Al₂O₃ ≤ 3.9%.

4. Mineral fibre according to any one of the preceding claims, characterised in that it comprises magnesium oxide in the following proportion by weight:
. MgO 3 - 16%,
and preferably 6.5 - 16%.

5. Mineral fibre according to any one of the preceding claims, characterised in that it comprises Na₂O and K₂O in the following proportions by weight, such that their sum is as follows:
. Na₂O + K₂O 1 to 6%
and preferably 1 - 5%.

6. Mineral fibre according to any one of the preceding claims, characterised in that it comprises P₂O₅ in the following proportion by weight:
. P₂O₅ 0.1 - 5%
and preferably 1 - 4%.

7. Mineral fibre according to any one of the preceding claims, characterised in that it comprises lime CaO, magnesia MgO and iron oxides Fe₂O₃ in the following proportions by weight, such that their sum is:
. CaO + MgO + Fe₂O₃ > 32%
and preferably > 35%.

8. Product to be used for thermal and/ or acoustic insulation, consisting of mineral fibres, characterised in that the said fibres have a chemical composition such as defined by any one of the preceding Claims.
